# EUROPEAN PATENT SPECIFICATION

(11) **EP 0 903 046 B1**
(45) Date of publication and mention of the grant of the patent: **19.04.2006**
(21) Application number: 97928562.4
(22) Date of filing: 27.05.1997
(51) Int. Cl.: H04Q 7/24

(54) **IMPROVEMENTS IN, OR RELATING TO, ATM TRANSMISSION BY RADIO**
VERBESSERUNGEN IN ODER BEZÜGLICH FUNK-ATM ÜBERTRAGUNG
PERFECTIONNEMENTS APPORTES OU RELATIFS A LA TRANSMISSION EN MODE ASYNCHRONE PAR RADIO

(30) Priority: 20.06.1996 SE 9602500
(43) Date of publication of application: 24.03.1999
(73) Proprietor: TELIA AB, 123 86 Farsta (SE)
(72) Inventor: EMILSSON, Stellan, S-655 94 Karlstad (SE); ÖHMAN, Hans, S-977 53 Lulea (SE); LARSSON, Roger, S-976 32 Lulea (SE)
(74) Representative: Akerman, Marten Lennart
(86) International application number: PCT/SE1997/000868
(87) International publication number: WO 1997/049254

(56) References cited:
- EP-A- 0 700 225
- WO-A-93/19559
- DAVID E. McDYSAN, DARREN L. SPOHN, "ATM Theory and Application", 1994, McGRAW-HILL, INC. ISBN 0-07-060362-6, pages 229-231, 237-240.

## Description

The present invention relates to a telecommunications system which includes an ATM-network and radio transmission links, a method for establishing radio access to an ATM-network and an ATM-adapted radio modem.

The increasing use of asynchronous transfer mode transmission systems means that there is a clear need to provide for a rapid and simple method for establishing radio access to ATM-networks. Ideally, it should be possible to use the same equipment for both fixed access and radio access, to an ATM-network.

Asynchronous Transfer Mode, ATM, is a method of transporting user and signalling information in fixed length cells. ATM is a key technology for the development of broadband systems. It provides a focal point for convergence between different services and different transmission systems and the form in which information will be switched and routed in multi-service networks.

ATM is already in use as a system for multiplexing in private networks, and various ATM multiplexers and routers are already available.

ATM operates at a sub-layer of OSI layer 2, called the ATM layer, and provides connection orientated virtual connections between two points. An ATM layer connection consists of a concatenation of ATM layer links used to provide an end-to-end connection. The ATM virtual connection is identified at the ATM layer by a combination of a Virtual Path Identifier and a Virtual Channel Identifier. Above the ATM layer, there is an ATM Adaptation Layer, AAL, that relates the virtual connection to the network service that is being carried. It may relate the ATM layer virtual connection to the network connection between terminals at network access points, e.g. exchange lines identified by ITU-T E.164 numbers. Signalling and user information from the network layer will normally be carried on separate virtual connections at the ATM layer.

With ATM, the information is carried in fixed length cells, the number of such cells per unit of time reflecting the bandwidth requirement of the user, and variations in their arrival rate reflecting the bursty nature of the traffic. The number of cells may correspond to sub-multiples, or multiples, of 64 kbit/s channels, or may correspond to an essentially random process, e.g. packets in transaction processing.

The ATM structure is described in ITU-T recommendation 1.361. An ATM cell consists of 53 octets and is divided into a header of 5 octets and an information field of 48 octets. The primary purpose of the header is to identify the connection number for the sequence of cells that constitute a virtual channel for a specific call. A number of virtual paths, multiplexed at the ATM layer, may be connected into the same physical layer with each path being identified by a Virtual Path Identifier, VPI, of 8 bits at the user-network interface and 12 bits at the network-node interface. A number of channels may exist within each path with each being identified by a Virtual Channel Identifier, VCI, of 16 bits.

The combination of VPI and VCI is unique. Values of VCI may be re-used in different virtual paths. The header also contains header error control, generic flow control, cell loss priority and payload type fields.

SDH may be used to provide the physical layer for the transmission of ATM cells. Because the SDH container capacity may not be an integer multiple of the ATM cell length, cells are allowed to cross container boundaries. In order to provide security against false cell delineation and the possibility of the information field replicating the STM-N frame alignment word, the cell information field, (but not the header), is scrambled before mapping into the container.

The ATM Adaptation Layer, AAL, maps user and signalling information into ATM cells. The ATM Adaptation Layer is itself divided into two sub-layers:
- the AAL Convergence Sub-layer, which consists of a common part and a service specific part and interfaces between the particular services supported and a Segmentation and Re-assembly Sub-layer; and
- the Segmentation and Re-assembly Sub-layer (SAR), which carries out the conversion to, and from, the ATM cells and may provide error detection and multiplexing - there are different types of SAR for different service types.

The AAL Adaptation Layer communicates with its peer layer through the use of headers and other information that is carried in the payload part of the ATM cell.

The ITU-T has defined two physical interfaces to ATM. one based on SDH, and the other on a version of Asynchronous Time Division (ATD) consisting of an unframed concatenation of ATM cells. At the user-network interface the rate in both cases is 155.520 Mbit/s.

EP-A-700225 discloses a data transmission system including a low bandwidth two way transmission network which is employed to arrange access to and use of a wide bandwidth bearer channel to facilitate the transmission of data at a wide bandwidth enhancing the efficiency of data transmission.

WO-A-9319559 discloses a telecommunication system having an ATM network and at least one radio link, wherein a subscriber equipment is connected to the radio link by an ATM adapted radio modem and wherein the subscriber equipment includes an ATM card containing an ATM-layer and an AAL-layer.

However, the prior art documents do not relate to the same problem as the present invention. That is none of the documents relates to the problem of minimising the processing of transmitted information and of avoiding unnecessary delays in the transmission of information. Further, none of the prior art documents provides a solution to the problem.

The present invention solves the above-mentioned problem by means of a telecommunications system and a method according to the independent claims 1 and 13, respectively. The present invention also refers to a mobile ATM-connection, a remote controlled robot, a public transport system and an ATM-adapted radio modem according to the independent claims 6, 7, 8 and 9, respectively. Preferred embodiments of the present invention are set out in the dependent claims.

According to a first aspect of the present invention, there is provided a telecommunications system, having an ATM-network and at least one radio link, wherein a subscriber equipment is connected to said radio link by an ATM-adapted radio modem, said subscriber equipment including an ATM-card containing an ATM-layer and an AAL-layer, said ATM-adapted radio modem has a mobile part and a fixed part, and said mobile part is linked to said subscriber equipment by a UNI-interface, said fixed part is located in a radio base station and linked to an ATM-node, of said ATM network, by a UNI-interface. Said ATM-adapted radio modem is adapted to determine traffic type by identifying a VCI-value in an ATM-header and to vary channel encoding and/or interleaving in dependence on traffic type; and in that said ATM-adapted radio modem is arranged so that telecommunications traffic is transmitted in the ATM-adapted radio modem via the ATM-layer only.

Said subscriber apparatus may be adapted for connection, either to said ATM-adapted radio modem, or directly to said ATM network, by a fixed link.

Complete AAL-PDUs for traffic routed via said ATM-adapted radio modem may not be created in said ATM-adapted radio modem.

According to a second aspect of the present invention, there is provided an ATM-adapted radio modem, for use with a telecommunications system as set forth in the previous paragraphs, characterised in that said ATM-adapted radio modem has a mobile part and a fixed part.

Said mobile part may be linked to a subscriber equipment by a UNI-interface.

Said fixed part may be linked to an ATM-node of an ATM network by a UNI-interface, said fixed part being located in a radio base station.

Said ATM-adapted radio modem may be arranged to identify different types of telecommunications traffic and optimise traffic management in dependence on traffic type.

Said ATM-adapted radio modem may be adapted to determine traffic type by identifying a VCI-value in an ATM-header.

Said ATM-adapted radio modem may be adapted to vary channel encoding and/or interleaving in dependence on traffic type.

Said ATM-adapted radio modem may be so arranged that telecommunications traffic, transmitted via an AAL-layer in said subscriber equipment, is not transmitted via an AAL-layer in said ATM-adapted radio modem.

Said ATM-adapted radio modem may be so arranged that said AAL-layer, in said ATM-adapted radio modem, is only used for transmission of signalling and/or control data whose transmission path terminates at said ATM-adapted radio modem.

Said ATM-adapted radio modem may have an internal interface, parallel to said UNI-interface, via which control signals originating from either said subscriber equipment, or said ATM network, are transmiited to the mobile part of said ATM-adapted radio modem.

Said ATM-adapted radio modem may be arranged so that complete AAL-PDUs are not created in said ATM-adapted radio modem for traffic which does not originate in said ATM-adapted radio modem.

According to a third aspect of the present invention, there is provided a method of transmitting ATM traffic from a subscriber apparatus to an ATM-network over a radio link, characterised in that said subscriber traffic is transmitted via an ATM-adapted radio modem having a mobile part connected to said subscriber apparatus and a fixed part connected to said ATM-network.

Traffic may be transmitted from said subscriber apparatus to said mobile part via a UNI-interface.

Said ATM-adapted radio modem may identify said traffic by type, e.g. audio, video, or data, and optimises traffic management to that traffic type.

Said ATM-adapted radio modem may determine traffic type by identifying a VCI-value in an ATM-header.

Said ATM-adapted radio modem may vary channel encoding and/or interleaving in dependence of traffic type.

Telecommunications traffic that is transmitted via the AAL-layer in said subscriber equipment may not be transmitted via an AAL-layer in said ATM-adapted radio modem.

Said AAL-layer in said ATM-adapted radio modem may be used only for transmission of signalling and/or control data whose transmission path terminates at said ATM-adapted radio modem.
Said ATM-adapted radio modem may have an internal interface, parallel to said UNI-interface, via which the mobile part of said ATM-adapted radio modem can be controlled from either said subscriber equipment, or said ATM network.

Complete AAL-PDUs may not be created in said ATM-adapted radio modem for traffic originating from outside said ATM-adapated radio modem.

Embodiments of the invention will now be described, by way of example, with reference to the accompanying drawings, in which:
Figure 1 illustrates a telecommunications system including an ATM-network and a radio link.
Figure 2 illustrates the radio link, shown in Figure 1, in greater detail.

To facilitate an understanding of the present invention, a glossary of some of the abbreviations used with reference to ATM transmission and radio mobile telecommunications services are set out below:
- AAL:: ATM Adaption Layer
- ATM:: Asynchronous Transfer Mode
- BS:: Base Station
- BSA:: Basic Service Area
- BSS:: Basic Service Set
- IP:: Internet Protocol
- LAN:: Local Area Network
- MT:: Mobile Terminal
- MVD:: MT pair-VCC mapping Database
- NNI:: Network Node Interface
- PDU:: Protocol Data Unit
- SRD:: ATM Switch Routing Database
- SVC:: Switched Virtual Connection
- UNI:: User Node Interface
- VC:: Virtual Channel
- VCC:: Virtual Channel Connection
- VCI:: Virtual Channel Indicator
- VLAN:: Virtual Local Area Network
- VPI:: Virtual Path Indicator
- WAN:: Wide Area Network

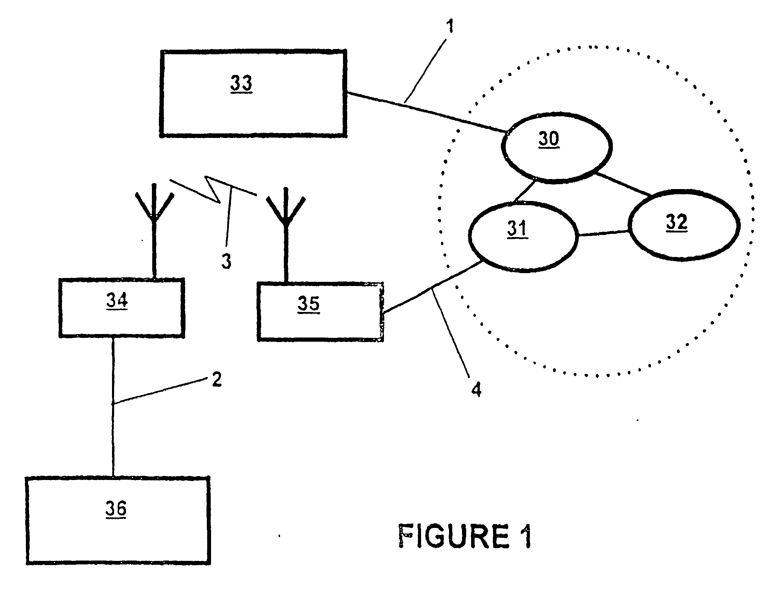

Referring now to Figure 1. there is shown an ATM-network having ATM-nodes, 30, 31 and 32. A subscriber apparatus, 33 is connected to ATM-node 30, via a fixed link and UNI-interface, 1. A subscriber apparatus, 36, is connected to an ATM-adapted radio modem having a mobile part 34, and a fixed part, 35, located in a radio base station. The subscriber apparatus is linked to ATM-adapted radio modem, 34, 35, by a UNI-interface, 2 The fixed part of the ATM-adapted radio modem, 35, is connected to ATM-node, 31, by a UNI-interface 4. The mobile, 34, and fixed, 35, parts of the ATM adapted radio modem are linked by radio link 3.

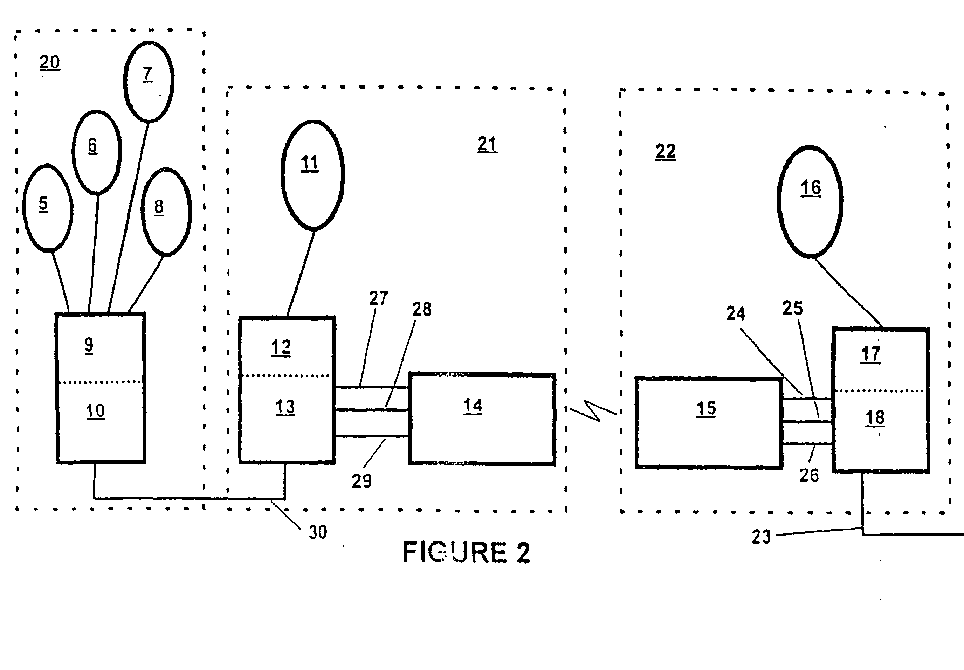

Referring now to Figure 2, a subscriber apparatus 20, corresponding to 36 in Figure 1, is connected to the mobile part of an ATM-adapted radio modem 21, corresponding to 34 in Figure 1. The fixed part of the ATM-adapted radio modem, 22, corresponding to 35 in Figure 1, is connected to an ATM network via a UNI-interface 23. The subscriber apparatus, 20, may have sources of different types of traffic, 5, 6, and 7. The traffic components originating from 5, 6, and 7 are video, audio and data, respectively. Signalling traffic, 8, may also originate from subscriber apparatus 20. The subscriber apparatus has an ATM-card equipped with an AAL-layer 9, and an ATM-layer 10. The subscriber apparatus 20, is linked to the mobile part of the ATM-adapted radio modem, 21, via a UNI-interface between ATM-layer 10, in subscriber apparatus 20, and ATM-layer 13, in the ATM-adapted radio modem. The mobile part of the ATM-adapted radio modem has an AAL-layer 12, which may be used for processing signalling traffic, 11, originating from, or directed to, the fixed part of the ATM-adapted radio modem. The .ATM-layer, 13, links directly to a radio modem 14. It should be noted that traffic originating from subscriber apparatus 20,is not processed by the AAL-layer 12.

The mobile part of the ATM-adapted radio modem, 22, has a radio modem 15, linked 24, 25, 26 to an ATM-layer 18. An AAL-layer 17, is provided for processing signalling traffic, 16.

For a subscriber equipment 33, to communicate via an ATM-network, having ATM nodes, 30, 31 and 32, it must include an ATM-card containing an ATM-layer 9, and an AAL-layer 10, see both Figure 2 and Figure 1. The ATM card may be connected by means of a fixed connection, for example an optical fibre link, to the ATM network via a UNI-interface, 1. The UNI-interface, 1, defines the signals which control the subscriber's access to the ATM network.

Where radio.access to the ATM-network is required, the subscriber equipment can be connected to an ATM card 12, 13, via a UNI-interface 30, see Figure 2. In Figure 1, this is illustrated as a connection between subscriber equipment 36, and a radio modem 34, via a UNI interface 2. In Figure 2, the ATM-card is an integral part of the mobile part of an ATM-adapted radio modem 21, which comprises the ATM-card 12, 13 and modem 14. The ATM-card comprises an AAL-layer, 12 and an ATM-layer, 13. The links, 27, 28 and 29, between the ATM layer and the modem 14 are adapted to handle video, audio and data traffic.

The mobile part of the ATM-adapted radio modem, 34, provides a link between mobile subscriber apparatus, 36 and a base station part of the ATM-adapted radio modem, 35, see Figure. 1. The two parts of the radio modem communicate over a radio link 3.

The base station part of the radio modem can be thought of as a reflected image of the mobile part. This means that the base station part of the radio modem, 35, communicates with a node, 31, in the ATM network, by means of a UNI-interface 4. This enables the base station part of the radio modem to be connected to the ATM network in the same manner as any other subscriber equipment.

The data flow generated by a subscriber equipment may contain a variety of application components, e.g. video, 5, audio, 6 and data 7, see Figure 2. This data flow will enter the ATM-adapted radio modem as a stream of ATM-cells. The ATM-header will enable the identification of the application component which has generated the data content of a particular ATM-cell by means of a VCI-value contained in the header. When a connection is first established, the subscriber equipment identifies the application component, i.e. the type of traffic, to the ATM-adapted modem, by means of the VCI-value corresponding to the particular application component employed. This enables the radio modem to optimise the management of different types of traffic, depending on application type. This may be realised by using different types of channel encoding and interleaving in the radio modem, 14, 15, see Figure 2. It should be noted that the term radio modem as used herein may refer to the combination of modems 14, and 15 at each end of the radio link. For example, where traffic originates from an application component that has a low real time requirement, e.g. data, retransmission over the radio channel can be used when an error, introduced by the radio link, is detected.

It should be noted that information which has been generated by, or is destined for, different application components, and is transmitted via an AAL-layer in the subscriber equipment 9, will not be transmitted via AAL-layers, 12 and 17, in the ATM-adapted radio modem. The information content of the ATM-cells (48 octets) will be forwarded directly to the radio modem part 14, 15. Here channel encoding and interleaving of the information will be performed before it is transmitted over the radio link. Since complete AAL-PDUs need not be recreated in the ATM adapted radio modem 12, 17, the processing of transmitted information is minimised. This, in turn, means that no unnecessary delays are introduced.

The AAL-layer in the ATM-adapted radio modem 12, 17, is only used for information which terminates there, for example, control signals between the subscriber terminal, e.g. from 8, and the ATM-adapted radio modem 11, or control signals between the base station part of the ATM-adapted radio modem 16, and the control and supervisory functions in the ATM network.

Thus, in parallel with the UNI-interface there will be an internal interface, via which the mobile part of the radio modem and its base station can be controlled from subscriber equipment, and/or from the network operator.

The present invention can be used in a number of ways, examples of these applications are set out below.
a. To provide radio access from a company's premises to a fixed ATM-network while preparations are made for the installation of a fixed link.
b. To provide a mobile ATM-connection within an industrial area.
c. To provide a communications link for operational control, via an ATM-network, of a remotely controlled robot, having a TV-camera and claw clutches. Such an arrangement enables a remotely located expert to control the robot, permitting improved response times. Equipment of this type can be used in hazardous environments, such as nuclear power stations, or for carrying out dangerous tasks, e.g. disarming bombs.
d. The mobile part of an ATM-adapted radio modem, according to the present invention, can have a number of subscriber equipments connected to it. For example, such a system could be fitted to a railway train enabling travellers to plug equipment into sockets provided in the vicinity of their seats. This would enable effective communication links to be established between a rail passenger and the outside world.

## Claims

1. A telecommunications system, having an ATM-network and at least one radio link (3), wherein a subscriber equipment (20,36) is connected to said radio link (3) by an ATM-adapted radio modem (21,34,22,35), said subscriber equipment (20,36) including an ATM-card containing an ATM-layer (10) and an AAL-layer (9), said ATM-adapted radio modem (21,34,22,35) has a mobile part (21,34) and a fixed part (22,35), and said mobile part (21,34) is linked to said subscriber equipment (20,36) by a UNI-interface (2,30), said fixed part (22,35) is located in a radio base station and linked to an ATM-node (31), of said ATM network, by a UNI-interface (4), **characterised in that** said ATM-adapted radio modem (21,34,22,35) is adapted to determine traffic type by identifying a VCI-value in an ATM-header and to vary channel encoding and/or interleaving in dependence on traffic type; and **in that** said ATM-adapted radio modem (21,34,22,35) is arranged so that telecommunications traffic is transmitted in the ATM-adapted radio modem (21,34,22,35) via the ATM-layer only.

2. A telecommunications system, as claimed in claim 1, **characterised in that** said subscriber equipment (20,33) is adapted for connection either to said ATM-adapted radio modem (21,34,22,35) or directly to said ATM network by a fixed link (1).

3. A telecommunications system, as claimed in any previous claim, **characterised in that** an AAL-layer (12,17) in said ATM-adapted radio modem (21,34,22,35) is used only for transmission of signalling and/or control data whose transmission path terminates at said ATM-adapted radio modem (21, 34, 22, 35) .

4. A telecommunications system, as claimed in claim 3, **characterised in that** said ATM-adapted radio modem (21,34,22,35) has an internal interface parallel to said UNI-interface (2,30) via which said mobile part (21,34) of said ATM-adapted radio modem (21,34,22,35) can be controlled from either said subscriber equipment (20,36), or said ATM network.

5. A telecommunications system, as claimed in any previous claim, **characterised in that** complete AAL-PDUs for traffic routed via said ATM-adapted radio modem (21,34,22,35) are not created in said ATM-adapted radio modem (21,34,22,35).

6. An ATM-adapted radio modem, for use with a telecommunications system as claimed in any of claims 1 to 5, wherein said ATM-adapted radio modem (21,34,22,35) has a mobile part (21,34) and a fixed part (22,35); said mobile part (21,34) is linked to a subscriber equipment (20,36) by a UNI-interface (2,30); said fixed part (22,35) is located in a radio base station and linked to an ATM-node (31) of an ATM network by a UNI-interface (4,23), **characterised in that** said ATM-adapted radio modem (21,34,22,35) is adapted to determine traffic type by identifying a VCI-value in an ATM-header, and to vary channel encoding and/or interleaving in dependence on traffic type; and **in that** said ATM-adapted radio modem (21,34,22,35) is arranged so that telecommunications traffic is transmitted in the ATM-adapted radio modem (21, 34, 22, 35) via the ATM-layer only.

7. An ATM-adapted radio modem, as claimed in claim 6, **characterised in that** said ATM-adapted radio modem (21,34,22,35) is so arranged that an AAL-layer (12,17), in said ATM-adapted radio modem (21,34,22,35), is only used for transmission of signalling and/or control data whose transmission path terminates at said ATM-adapted radio modem (21,34,22,35).

8. An ATM-adapted radio modem, as claimed in claim 7, **characterised in that** said ATM-adapted radio modem (21,34,22,35) has an internal interface, parallel to said UNI-interface (2,30), via which control signals originating from either said subscriber equipment (20,36), or said ATM network, are transmitted to the mobile part (21,34) of said ATM-adapted radio modem (21,34,22,35).

9. An ATM-adapted radio modem, as claimed in any of claims 6 to 8, **characterised in that** said ATM-adapted radio modem (21,34,22,35) is arranged so that complete AAL-PDUs are not created in said ATM-adapted radio modem (21,34,22,35) for traffic which does not originate in said ATM-adapted radio modem (21,39,22,35).

10. A method of transmitting telecommunications traffic in a telecommunications system having an ATM-network and at least one radio link (3), wherein a subscriber equipment (20,36) is connected to said radio link (3) by an ATM-adapted radio modem (21,34,22,35), said subscriber equipment (20,36) includes an ATM-card containing am ATM-layer (10) and an AAL-layer (9), wherein said ATM-adapted radio modem (21,34,22,35) has a mobile part (21,34) connected to said subscriber equipment (20,36) and a fixed part (22,35) connected to said ATM-network, and wherein said fixed part (22,35) is located in a radio base station, **characterised in that** said ATM-adapted radio modem (21,34,22,35) determines traffic type by identifying a VCI-value in an ATM-header, and-varies channel encoding and/or interleaving in dependence of traffic type; and telecommunications traffic is transmitted in the ATM-adapted radio modem (21,34,22,35) via the ATM-layer only.

11. A method, as claimed in claim 10, **characterised in that** traffic is transmitted from said subscriber equipment (20,36) to said mobile part (21,34) via said UNI-interface (2,30).

12. A method, as claimed in any of claims 10 to 11, **characterised in that** an AAL-layer (12,17) in said ATM-adapted radio modem (21,34,22,35) is used only for transmission of signalling and/or control data whose transmission path terminates at said ATM-adapted radio modem (21, 34, 22, 35) .

13. A method, as claimed in claim 12, **characterised in that** said ATM-adapted radio modem (21,39,22,35) has an internal interface, parallel to said UNI-interface (2,30), via which the mobile part (21,34) of said ATM-adapted radio modem (21,34,22,35) can be controlled from either said subscriber equipment (20,36), or said ATM network.

14. A method, as claimed in any of claims 10 to 13, **characterised in that** complete AAL-PDUs are not created in said ATM-adapted radio modem (21,34,22,35) for traffic originating from outside said ATM-adapted radio modem (21,34,22,35).

## Patentansprüche

1. Telekommunikationssystem mit einem ATM-Netzwerk und wenigstens einer Funkverbindung (3), wobei ein Teilnehmergerät (20, 36) mit der Funkverbindung (3) über ein ATM-angepasstes Funkmodem (21, 34, 22, 35) verbunden ist, wobei das Teilnehmergerät (20, 36) eine ATM-Karte enthält, die eine ATM-Schicht (10) und eine AAL-Schicht (9) enthält, wobei das ATM-angepasste Funkmodem (21, 34, 22, 35) einen Mobilteil (21, 34) und einen Festteil (22, 35) hat und der Mobilteil (21, 34) mit dem Teilnehmergerät (20, 36) durch eine UNI-Schnittstelle (2, 30) verknüpft ist, der Festteil (22, 35) in einer Funkbasisstation liegt und mit einem ATM-Knoten (31) des ATM-Netzwerkes durch eine UNI-Schnittstelle (4) verknüpft ist, **dadurch gekennzeichnet, dass** das ATM-angepasste Funkmodem (31, 34, 22, 35) so ausgebildet ist, dass es den Verkehrstyp durch Idendifizieren eines VCI-Wertes in einem ATM-Kopf bestimmen kann und die Kanalcodierung und/oder Verschachtelung in Abhängigkeit vom Verkehrstyp variieren kann; und dass das ATM-angepasste Funkmodem (21, 34, 22, 35) so angeordnet ist, dass Telekommunikationsverkehr in dem ATM-angepassten Funkmodem (21, 34, 22, 35) nur über die ATM-Schicht übertragen wird.

2. Telekommunikationssystem nach Anspruch 1, **dadurch gekennzeichnet, dass** das Teilnehmergerät (20, 33) für die Verbindung entweder mit dem ATM-angepassten Funkmodem (21, 34, 22, 35) oder direkt mit dem ATM-Netzwerk über eine feststehende Verbindung (1) ausgebildet ist.

3. Telekommunikationssystem nach einem der vorstehenden Ansprüche, **dadurch gekennzeichnet, dass** eine AAL-Schicht (12, 17) in dem ATM-angepassten Funkmodem (21, 34, 22, 35) nur für die Übertragung der Signalgebung und/oder Steuerdaten verwendet wird, deren Übertragungsweg an dem ATM-angepassten Funkmodem (21, 34, 22, 35) endet.

4. Telekommunikationssystem nach Anspruch 3, **dadurch gekennzeichnet, dass** das ATM-angepasste Funkmodem (21, 34, 22, 35) eine interne Schnittstelle parallel zu der UNI-Schnittstelle (2, 30) hat, über welche der Mobilteil (21, 34) des ATM-angepassten Funkmodems (21, 34, 22, 35) entweder von dem Teilnehmergerät (20, 36) oder dem ATM-Netzwerk gesteuert werden kann.

5. Telekommunikationssystem nach einem der vorstehenden Ansprüche, **dadurch gekennzeichnet, dass** in dem ATM-angepassten Funkmodem (21, 34, 22, 35) vollständige AAL-PDUs für Verkehr, der über das ATM-angepasste Funkmodem (21, 34, 22, 35) geleitet wird, nicht erzeugt sind.

6. ATM-angepasstes Funkmodem zur Verwendung in einem Telekommunikationssystem wie nach einem der Ansprüche 1 bis 5 beansprucht, wobei das ATM-angepasste Funkmodem (21, 34, 22, 35) einen Mobilteil (21, 34) und einen Festteil (22, 35) hat; der Mobilteil (21, 34) mit einem Teilnehmergerät (20, 36) mittels einer UNI-Schnittstelle (2, 30) verbunden ist; der Festteil (22, 35) in einer Funkbasisstation liegt und mit einem ATM-Knoten (31) eines ATM-Netzwerkes durch eine UNI-Schnittstelle (4, 23) verbunden ist, **dadurch gekennzeichnet, dass** das ATM-angepasste Funkmodem (21, 34, 22, 35) so ausgebildet ist, dass es den Verkehrstyp durch Identifizieren eines VCI-Wertes in einem ATM-Kopf bestimmen kann und die Kanalcodierung und/oder Verschachtellungen in Abhängigkeit von dem Verkehrstyp variieren kann; und dass das ATM-angepasste Funkmodem 21, 34, 22, 35) so angeordnet ist, dass Telekommunikationsverkehr in dem ATM-angepassten Funkmodem (21, 34, 22, 35) nur über die ATM-Schicht übertragen wird.

7. ATM-angepasstes Funkmodem nach Anspruch 6, **dadurch gekennzeichnet, dass** das ATM-angepasste Funkmodem (21, 34, 22, 35) so angeordnet ist, dass in dem ATM-angepassten Funkmodem (21, 34, 22, 35) eine AAL-Schicht (12, 17) nur für die Übertragung der Signalgebung und/oder der Steuerdaten, deren Übertragungswert an dem ATM-angepassten Funkmodem (21, 34, 22, 35) endet, verwendet wird.

8. ATM-angepasstes Funkmodem nach Anspruch 7, **dadurch gekennzeichnet, dass** das ATM-angepasste Funkmodem (21, 34, 22, 35) eine interne Schnittstelle parallel zu der UNI-Schnittstelle (2, 30) hat, über welche Steuersignale, welche entweder von dem Teilnehmergerät (20, 36) oder dem ATM-Netzwerk herrühren, auf den Mobilteil (21, 34) des ATM-angepassten Funkmodem (21, 34, 22, 35) übertragen werden.

9. ATM-angepasstes Funkmodem nach einem der Ansprüche 6 bis 8, **dadurch gekennzeichnet, dass** das ATM-angepasste Funkmodem (21, 34, 22, 35) so angeordnet ist, dass in dem ATM-angepassten Funkmodem (21, 34, 22, 35) für den Verkehr, welcher nicht seinen Ursprung in dem ATM-angepassten Funkmodem (21, 34, 22, 35) hat, keine vollständigen AAL-PDUs erzeugt werden.

10. Verfahren zum Übertragen von Telekommunikationsverkehr in einem Telekommunikationssystem mit einem ATM-Netzwerk und wenigstens einer Funkverbindung (3), wobei ein Teilnehmergerät (20, 36) mit der Funkverbindung (3) durch ein ATM-angepasstes Funkmodem (21, 34, 22, 35) verbunden ist, das Teilnehmergerät (20, 36) eine ATM-Karte enthält, die eine ATM-Schicht (10) und eine AAL-Schicht (9) aufweist, wobei das ATM-angepasste Funkmodem (21, 34, 22, 35) einen Mobilteil (21, 34) hat, der mit dem Teilnehmergerät (20, 36) verbunden ist und einen Festteil (22, 35) hat, der mit dem ATM-Netzwerk verbunden ist und, wobei der Festteil (22, 35) in einer Funkbasisstation liegt, **dadurch gekennzeichnet, dass** das ATM-angepasste Funkmodem (21, 34, 22, 35) den Verkehrstyp durch Identifizieren eines VCI-Wertes in einem ATM-Kopf bestimmt und die Kanalcodierung und/oder Verschachtelung in Abhängigkeit vom Verkehrstyp variiert; und Telekommunikationsverkehr in dem ATM-angepassten Funkmodem (21, 34, 22, 35) nur über die ATM-Schicht übertragen wird.

11. Verfahren nach Anspruch 10, **dadurch gekennzeichnet, dass** Verkehr von dem Teilnehmergerät (20, 36) über die UNI-Schnittstelle (2, 30) auf den Mobilteil (21, 34) übertragen wird.

12. Verfahren nach einem der Ansprüche 10 bis 11, **dadurch gekennzeichnet, dass** eine AAL-Schicht (12, 17) in dem ATM-angepassten Funkmodem (21, 34, 22, 35) nur für die Übertragung der Signalgebung und/oder von Steuerungsdaten verwendet wird, deren Übertragungsweg an dem ATM-angepassten Funkmodem (21, 34, 22, 35) endet.

13. Verfahren nach Anspruch 12, **dadurch gekennzeichnet, dass** das ATM-angepasste Funkmodem (21, 34, 22, 35) eine interne Schnittstelle parallel zu der UNI-Schnittstelle (2, 30) hat, über welche der Mobilteil (21, 34) des ATM-angepassten Funkmodems (21, 34, 22, 35) entweder von dem Teilnehmergerät (20, 36) oder dem ATM-Netzwerk gesteuert werden kann.

14. Verfahren nach einem der Ansprüche 10 bis 13, **dadurch gekennzeichnet, dass** in dem ATM-angepassten Funkmodem (21, 34, 22, 35) für Verkehr, der von außerhalb des ATM-angepassten Funkmodems (21, 34, 22, 35) herrührt keine vollständigen AAL-PDUs erzeugt werden.

## Revendications

1. Système de télécommunication, comprenant un réseau ATM et au moins une liaison radio (3), dans lequel un équipement d'abonné (20, 36) est connecté à la dite liaison radio (3) par un modem radio adapté ATM (21, 34, 22, 35), le dit équipement d'abonné (20, 36) incluant une carte ATM contenant une couche ATM (10) et une couche AAL (9), le dit modem radio adapté ATM (21, 34, 22, 35) comporte une partie mobile (21, 34) et une partie fixe (22, 35) et la dite partie mobile (21, 34) est reliée au dit équipement d'abonné (20, 36) par une interface UNI (2, 30), la dite partie fixe (22, 35) est située dans une station de base radio et reliée à un noeud ATM (31) du dit réseau ATM par une interface utilisateur-réseau UNI (4), **caractérisé en ce que** le dit modem radio adapté ATM (21, 34, 22, 35) est prévu pour déterminer le type de trafic par identification d'une valeur VCI dans un en-tête ATM et pour modifier le codage de canal et/ou l'imbrication en fonction du type de trafic ; et en que le dit modem radio adapté ATM (21, 34, 22, 35) est agencé de sorte que le trafic de télécommunication est transmis dans le modem radio adapté ATM (21, 34, 22, 35) via la couche ATM seulement.

2. Système de télécommunication selon la revendication 1, **caractérisé en ce que** ledit équipement d'abonné (20, 33) est prévu pour connexion soit au dit modem radio adapté ATM (21, 34, 22, 35) soit directement au dit réseau ATM par une liaison fixe (1).

3. Système de télécommunication selon une quelconque des revendications précédentes, **caractérisé en ce qu'**une couche AAL (12, 17) dans le dit modem radio adapté ATM (21, 34, 22, 35) est utilisée seulement pour transmission de données de signalisation et/ou de commande dont le chemin de transmission se termine au dit modem radio adapté ATM (21, 34, 22, 35).

4. Système de télécommunication selon la revendication 3, **caractérisé en ce que** le dit modem radio adapté ATM (21, 34, 22, 35) comprend une interface interne parallèle à la dite interface UNI (2, 30), par l'intermédiaire de laquelle la dite partie mobile (21, 34) du dit modem radio adapté ATM (21, 34, 22, 35) peut être commandé à partir soit du dit équipement d'abonné (20, 36) soit du dit réseau ATM.

5. Système de télécommunication selon une quelconque des revendications précédentes, **caractérisé en ce que** des AAL-PDU complets pour trafic acheminé via le dit modem radio adapté ATM (21, 34, 22, 35) ne sont pas créés dans le dit modem radio adapté ATM (21, 34, 22, 35).

6. Modem radio adapté ATM (21, 34, 22, 35) utilisable avec un système de télécommunication selon une quelconque des revendications 1 à 5, dans lequel le dit modem radio adapté ATM (21, 34, 22, 35) comprend une partie mobile (21, 34) et une partie fixe (22, 35) ; la dite partie mobile (21, 34) est reliée à un équipement d'abonné (20, 36) par une interface UNI (2, 30) ; la dite partie fixe (22, 35) est située dans une station de base radio et reliée à un noeud ATM (31) d'un réseau ATM par une interface UNI (4, 23) ; **caractérisé en ce que** le dit modem radio adapté ATM (21, 34, 22, 35) est prévu pour déterminer le type de trafic par identification d'une valeur VCI dans un en-tête ATM, et pour modifier le codage de canal et/ou l'imbrication en fonction du type de trafic ; et **en ce que** le dit modem radio adapté ATM (21, 34, 22, 35) est agencé de sorte que le trafic de télécommunication est transmis dans le modem radio adapté ATM (21, 34, 22, 35) via la couche ATM seulement.

7. Modem radio adapté ATM (21, 34, 22, 35) selon la revendication 6, **caractérisé en ce que** le dit modem radio adapté ATM (21, 34, 22, 35) est agencé de sorte qu'une couche AAL (12, 17), dans le dit modem radio adapté ATM (21, 34, 22, 35), est utilisée seulement pour transmission de données de signalisation et/ou de commande dont le chemin de transmission se termine au dit modem radio adapté ATM (21, 34, 22, 35).

8. Modem radio adapté ATM (21, 34, 22, 35) selon la revendication 7, **caractérisé en ce que** le dit modem radio adapté ATM (21, 34, 22, 35) comprend une interface interne, parallèle à la dite iriterface UNI (2, 30), par l'intermédiaire de laquelle des signaux de commande provenant soit du dit équipement d'abonné (20, 36) soit du dit réseau ATM sont transmis à la partie mobile (21, 34) du dit modem radio adapté ATM (21 , 34, 22, 35).

9. Modem radio adapté ATM (21, 34, 22, 35) selon une quelconque des revendications 6 à 8, **caractérisé en ce que** le dit modem radio adapté ATM (21, 34, 22, 35) est agencé de sorte que des AAL-PDU complets ne sont pas créés dans le dit modem radio adapté ATM (21, 34, 22, 35) pour un trafic qui n'a pas son origine dans le dit modem radio adapté ATM (21, 34, 22, 35).

10. Procédé de transmission d'un trafic de télécommunication dans un système de télécommunication ayant un réseau ATM et au moins une liaison radio (3), dans lequel un équipement d'abonné (20, 36) est connecté à la dite liaison radio (3) par un modem radio adapté ATM (21, 34, 22, 35), le dit équipement d'abonné (20, 36) comprend une carte ATM contenant une couche ATM (10) et une couche AAL (9), dans lequel le dit modem radio adapté ATM (21, 34, 22, 35) comprend une partie mobile (21, 34) connectée au dit équipement d'abonné (20, 36) et une partie fixe (22, 35) connectée au dit réseau ATM, et dans lequel la dite partie fixe (22, 35) est située dans une station de base radio, **caractérisé en ce que** le dit modem radio adapté ATM (21, 34, 22, 35) détermine le type de trafic par identification d'une valeur VCI dans un en-tête ATM et modifie le codage de canal et/ou l'imbrication en fonction du type de trafic ; et le trafic de télécommunication est transmis dans le modem radio adapté ATM (21, 34, 22, 35) via la couche ATM seulement.

11. Procédé selon la revendication 10, **caractérisé en ce que** le trafic est transmis du dit équipement d'abonné (20, 36) à la dite partie mobile (21, 34) via la dite interface UNI (2, 30).

12. Procédé selon une quelconque des revendications 10 à 11, **caractérisé en ce qu'**une couche AAL (12, 17) dans le dit modem radio adapté ATM (21, 34, 22, 35) est utilisée seulement pour transmission de données de signalisation et/ou de commande dont le chemin de transmission se termine au dit modem radio adapté ATM (21, 34, 22, 35).

13. Procédé selon la revendication 12, **caractérisé en ce que** le dit modem radio adapté ATM (21, 34, 22, 35) comprend une interface interne, parallèle à la dite interface UNI (2, 30), par l'intermédiaire de laquelle la partie mobile (21, 34) du dit modem radio adapté ATM (21, 34, 22, 35) peut être commandée à partir soit du dit équipement d'abonné (20, 36) soit du dit réseau ATM.

14. Procédé selon une quelconque des revendications 10 à 13, **caractérisé en ce que** des AAL-PDU complets ne sont pas créés dans le dit modem radio adapté ATM (21, 34, 22, 35) pour un trafic provenant de l'extérieur du dit modem radio adapté ATM (21, 34, 22, 35).
